# EUROPEAN PATENT APPLICATION

(11) **EP 4 818 879 A1**
(43) Date of publication of application: **07.10.2026**
(21) Application number: 25707633.1
(22) Date of filing: 11.02.2025
(51) Int. Cl.: G06F 3/06, G06F 21/60

(54) **MEMORY SYSTEM AND OPERATING METHOD THEREFOR, AND SYSTEM**

(71) Applicant: Yangtze Memory Technologies Co., Ltd., Wuhan, Hubei 430074 (CN)
(72) Inventor: RU, Feng, Wuhan, Hubei 430074 (CN)
(74) Representative: Gramm, Lins & Partner Patent- und Rechtsanwälte PartGmbB
(86) International application number: PCT/CN2025/076881
(87) International publication number: WO 2026/170344

(57) **Abstract**

Examples of the present disclosure provide a memory system and an operating method and a system thereof, and the operating method of the memory system comprises: receiving a first command sent by a first user; wherein the memory system is configured with a first namespace accessible by the first user and a second namespace accessible by a second user; and the first command carries an identifier corresponding to file set information of the second namespace; and copying data corresponding to the file set information in the second namespace to the first namespace based on the identifier in response to the first command.

## Description

### TECHNICAL FIELD

The present disclosure relates to the field of semiconductor technologies, including but not limited to a memory system and an operating method and a system thereof.

### BACKGROUND

With the rapid development of data storage technology, more and more data memory systems are appearing in electronic devices used by people, such as Solid State Drives (SSD). SSD has been widely used in fields of military, automobile, industry, health care, aviation, etc. due to the characteristics of fast read and write speed, antivibration, low power consumption, no noise, low heat, and lightweight.

### SUMMARY

According to a first aspect of the examples of the present disclosure, an operating method of a memory system is provided, comprising: receiving a first command sent by a first user; wherein the memory system is configured with a first namespace accessible by the first user and a second namespace accessible by a second user; and the first command carries an identifier corresponding to file set information of the second namespace; and copying data corresponding to the file set information in the second namespace to the first namespace based on the identifier in response to the first command.

In some aspects, the identifier carried in the first command is provided by the second user to the first user.

In some aspects, the operating method further comprises: receiving a second command sent by the second user; wherein the second command carries the file set information of the second namespace; and generating the identifier corresponding to the file set information of the second namespace based on the file set information of the second namespace.

In some aspects, the operating method further comprises: sending the identifier to the second user.

In some aspects, the operating method further comprises: updating a correspondence relationship between the identifier and a corresponding file set information into a correspondence table in a storage component in a memory controller.

In some aspects, the copying data corresponding to the file set information in the second namespace to the first namespace based on the identifier in response to the first command comprises: determining the file set information corresponding to the identifier based on the identifier carried in the first command and the correspondence table; and copying the data corresponding to the file set information in the second namespace to the first namespace based on the file set information corresponding to the identifier in response to the first command.

In some aspects, the second command comprises a Directive Send command.

In some aspects, the file set information comprises logical address information and protection information.

In some aspects, the first user comprises one of a virtual machine, an application program, and a host, the second user comprises one of a virtual machine, an application program, and a host, and the virtual machine / application program / host of the first user are different from the virtual machine / application program / host of the second user, respectively.

In some aspects, the first namespace comprises one of a non-volatile namespace and a subsystem local memory namespace, and the second namespace comprises one of a non-volatile namespace and a subsystem local memory namespace.

In some aspects, the memory system comprises a non-volatile memory subsystem, and the first namespace and the second namespace correspond to a same non-volatile memory subsystem.

In some aspects, the identifier comprises user information reflecting the second user.

According to a second aspect of an example of the present disclosure, a memory system is provided, comprising a memory controller and a non-volatile memory coupled to the memory controller, wherein the memory system is configured with a first namespace accessible by the first user and a second namespace accessible by a second user; and the memory controller is configured to: receive a first command sent by the first user; wherein the first command carries an identifier corresponding to file set information of the second namespace; and copy data corresponding to the file set information in the second namespace to the first namespace based on the identifier in response to the first command.

In some aspects, the identifier carried in the first command is provided by the second user to the first user.

In some aspects, the memory controller is configured to: receive a second command sent by the second user; wherein the second command carries the file set information of the second namespace; and generate the identifier corresponding to the file set information of the second namespace based on the file set information of the second namespace.

In some aspects, the memory controller is configured to: send the identifier to the second user.

In some aspects, the memory controller comprises a storage component; and the memory controller is configured to: update a correspondence relationship between the identifier and a corresponding file set information into a correspondence table in the storage component.

In some aspects, the memory controller is configured to: determine the file set information corresponding to the identifier based on the identifier carried in the first command and the correspondence table; and copy the data corresponding to the file set information in the second namespace to the first namespace based on the file set information corresponding to the identifier in response to the first command.

In some aspects, the second command comprises a Directive Send command.

In some aspects, the file set information comprises logical address information and protection information.

In some aspects, the first user comprises one of a virtual machine, an application program, and a host, the second user comprises one of a virtual machine, an application program, and a host, and the virtual machine / application program / host of the first user are different from the virtual machine / application program / host of the second user, respectively.

In some aspects, the first namespace comprises one of a non-volatile namespace and a subsystem local memory namespace, and the second namespace comprises one of a non-volatile namespace and a subsystem local memory namespace.

In some aspects, the memory system comprises a solid state drive.

In some aspects, the memory system comprises a non-volatile memory subsystem, and the first namespace and the second namespace correspond to a same non-volatile memory subsystem.

In some aspects, the non-volatile memory comprises the first namespace and the second namespace.

According to a third aspect of an example of the present disclosure, a system is provided, comprising: a memory system and a first user and a second user coupled to the memory system; the memory system comprises a memory controller and a non-volatile memory coupled to the memory controller, wherein the memory system is configured with a first namespace accessible by the first user and a second namespace accessible by the second user; and the memory controller is configured to: receive a first command sent by the first user; wherein the first command carries an identifier corresponding to file set information of the second namespace; and copy data corresponding to the file set information in the second namespace to the first namespace based on the identifier in response to the first command.

### BRIEF DESCRIPTION OF DRAWINGS

FIG. 1 is a first schematic diagram of an example system having a memory system according to an example of the present disclosure;
FIG. 2a is a schematic diagram of an example memory card having a memory system according to an example of the present disclosure;
FIG. 2b is a schematic diagram of an example solid state drive with a memory system according to an example of the present disclosure;
FIG. 3 is a schematic diagram of distribution of memory cells of a three-dimensional NAND type memory according to an example of the present disclosure;
FIG. 4 is a schematic diagram of an example memory device comprising a peripheral circuit according to an example of the present disclosure;
FIG. 5 is a schematic diagram of an example memory comprising a memory array and a peripheral circuit according to an example of the present disclosure;
FIG. 6 is a second schematic diagram of an example system having a memory system according to an example of the present disclosure;
FIG. 7 is a schematic structural diagram of a memory device according to an example of the present disclosure;
FIG. 8 is a flowchart of an operating method of a memory system according to an example of the present disclosure;
FIG. 9 is a first schematic structural diagram of a memory system according to an example of the present disclosure;
FIG. 10 is a second schematic structural diagram of a memory system according to an example of the present disclosure;
FIG. 11 is a flowchart of an operating method of a memory system according to an example of the present disclosure;

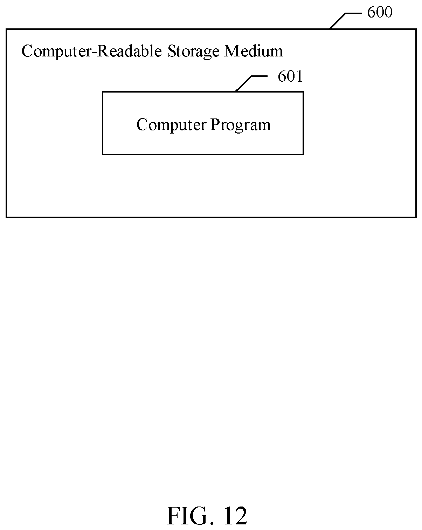

FIG. 12 is a schematic diagram of a framework of a computer-readable storage medium according to an example of the present disclosure;
FIG. 13 is a third schematic structural diagram of a memory system according to an example of the present disclosure;
FIG. 14 is a fourth schematic structural diagram of a memory system according to an example of the present disclosure; and
FIG. 15 is a schematic structural diagram of a system according to an example of the present disclosure.

### DETAILED DESCRIPTION

Example aspects disclosed in the present disclosure will be described in more detail below with reference to the accompanying drawings. Although example aspects of the present disclosure are shown in the accompanying drawings, it should be understood that the present disclosure may be implemented in various forms and should not be limited to the aspects set forth herein. Rather, these aspects are provided so that the present disclosure can be more thoroughly understood and the scope disclosed in the present disclosure can be fully conveyed to those skilled in the art.

In the following description, numerous details are given in order to provide a more thorough understanding of the present disclosure. However, it will be apparent to one skilled in the art that, the present disclosure may be practiced without one or more of these details. In other examples, in order to avoid confusion with the present disclosure, some technical features known in the art are not described; that is, not all features of the actual examples are described here, and well-known functions and structures are not described in detail.

In the drawings, like reference numerals refer to like elements throughout.

It should be understood that spatial relation terms such as "beneath," "below," "lower," "under", "above," "upper," etc., may be used herein for ease of description to describe the relationship between one element or feature and other elements or features shown in the figures. It should be appreciated that, in addition to the orientations shown in the figures, the spatial-relation terms intent to also comprise different orientations of the devices in use and operation. For example, if the devices in the figures are flipped, then elements or features described as "below" or "under" or "beneath" other elements or features will be oriented "on" other elements or features. Thus, the example terms "below" and "beneath" may comprise both upper and lower orientations. The devices may be additionally oriented (rotated 90 degrees or other orientations) and the spatial description terminology used herein is interpreted accordingly.

A term used herein is for the purpose of describing a particular example only and is not to be considered as limitation of the present disclosure. As used herein, "a", "an" and "said/the" in the singular form are intended to comprise the plural forms as well, unless the context indicated clearly otherwise. It should also be understood that at least one of the terms "consists of" or "comprising", when used in this description, identify the presence of at least one of the features, integers, steps, operations, elements or components, but do not exclude the presence or addition of at least one of one or more other features, integers, steps, operations, elements, components or groups. As used herein, the term "at least one of" comprises any and all combinations of the related listed items.

In some examples, the user can copy data in the same namespace in the memory system as desired, or the user can copy data in one namespace in the memory system to another namespace as desired.

It should be noted that the user in the examples of the present disclosure comprises, but is not limited to, a host, an application program, and a virtual machine.

The following will take the memory system comprising a three-dimensional NAND type memory and the user being a host as an example to illustrate the memory system and the system according to the present disclosure.

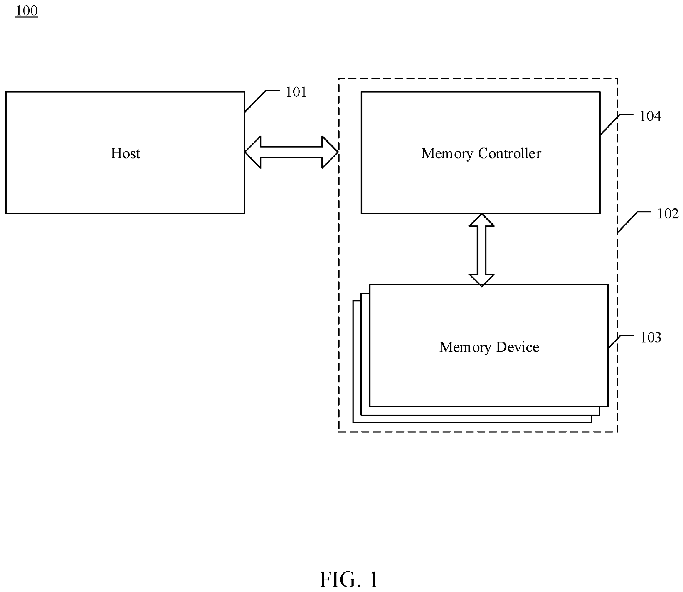

FIG. 1 is a schematic diagram of an example system having a memory system according to an example of the present disclosure. In an example of the present disclosure, the system 100 may be a mobile phone, a desktop computer, a laptop computer, a tablet computer, a vehicle computer, a game console, a printer, a positioning device, a wearable electronic device, a smart sensor, a Virtual Reality (VR) device, an Augmented Reality (AR) device, or any other suitable electronic device having a memory therein. As shown in FIG. 1, the system 100 may comprise a host 101 and a memory system 102, which may comprise one or more memory devices 103 and a memory controller 104. The host 101 may comprise a processor of an electronic device, for example, a Central Processing Unit (CPU), or a System on a Chip (SoC), for example, an Application Processor (AP). The host 101 may be configured to transmit data to the memory system 102 or receive data from the memory system 102.

In some aspects, the memory controller 104 is coupled to the memory device 103 and the host 101 and is configured to control the memory device 103. The memory controller 104 may manage data stored in the memory device 103 and communicate with the host 101. In some examples, the memory controller 104 is designed to operate in a low duty cycle environment, such as in a secure digital card, Compact Flash Card (CFC), Universal Serial Bus (USB) flash drive, or to operate in other medium for use in electronic devices such as personal computers, digital cameras, mobile phones, or the like. In other aspects, the memory controller 104 is designed to operate in a high duty cycle environment, such as in a solid state disk or embedded Multi-Media Card (eMMC).

In some examples, the memory controller 104 and the one or more memory devices 103 may be integrated into various types of storage devices, that is, the memory system 102 may be implemented and packaged into different types of terminal electronics.

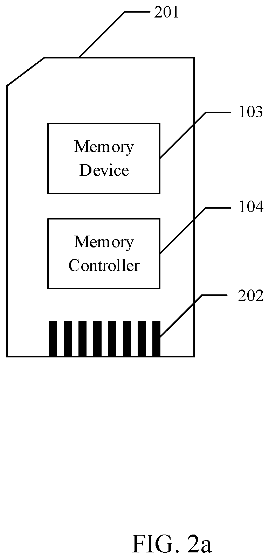

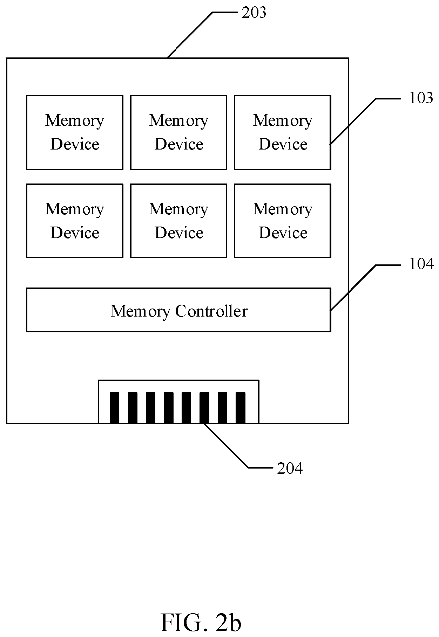

In one example as shown in FIG. 2a, the memory controller 104 and the single memory device 103 may be integrated into the memory card 201. The memory card 201 may comprise one of a compact flash memory card, a Smart Media Card (SMC), a Memory Stick (MS), a Multi-Media Card (MMC), for example, an RS-MMC, an MMCmicro, an eMMC, or the like, a secure digital card, for example, a Mini SD card, a Micro SD card, an SDHC card, or the like, and a universal flash memory card. The memory card 201 may also comprise a memory card connector 202 that couples the memory card 201 with a host-side device (e.g., host 101 in FIG. 1). In another example as shown in FIG. 2b, the memory controller 104 and a plurality of memory devices 103 may be integrated into SSD 203. SSD 203 may also comprise an SSD connector 204 that couples SSD 203 with a host-side device (e.g., host 101 in FIG. 1). In some aspects, at least one of the storage capacity or operating speed of SSD 203 is greater than at least one of the storage capacity or operating speed of memory card 201.

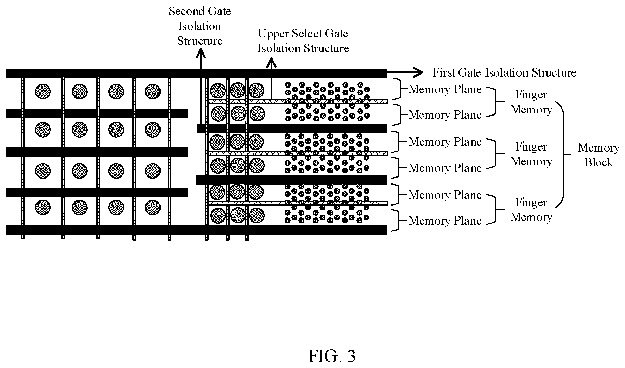

FIG. 3 exemplarily shows a schematic structural diagram of a memory array of a three-dimensional NAND type memory, as shown in FIG. 3, a memory array of a three-dimensional NAND type memory is composed of a plurality of memory cell rows parallel to each other and parallel to a gate isolation structure, where every four memory cell rows are separated by the gate isolation structure and an upper select gate isolation structure, and each memory cell row comprise a plurality of memory cells. The gate isolation structure may comprise a first gate isolation structure and a second gate isolation structure, the first gate isolation structure divides the memory array into a plurality of memory blocks, the plurality of second gate isolation structures may divide the memory block into a plurality of memory fingers, and an upper selection gate isolation structure arranged in the middle of each memory finger may divide the memory finger into two parts, thereby dividing the memory finger into two memory planes. One memory block shown in FIG. 3 comprises 6 memory planes, and in actual application, the number of memory planes in one memory block is not limited thereto. Memory cells in a memory plane coupled to a certain word line may be referred to as a memory page, and the memory page herein is a physical page.

It should be noted that the number of memory cell rows between the gate isolation structure and the upper select gate isolation structure given in FIG. 3 is merely exemplary, and is not intended to limit the number of memory cell rows comprised in one memory finger of the three-dimensional NAND type memory in the present disclosure. In actual applications, the number of memory cell rows comprised in one memory finger may be adjusted according to actual conditions, such as 2, 4, 8, 16, etc.

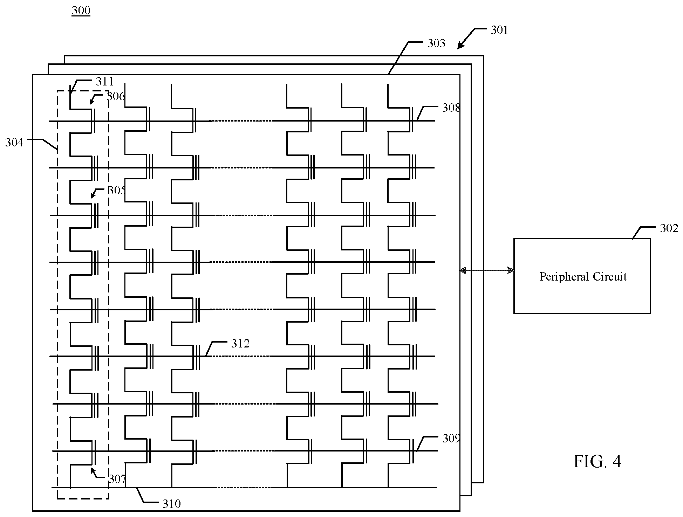

FIG. 4 is a schematic circuit diagram of an example memory device 300 comprising a peripheral circuit according to an example of the present disclosure. The memory device 300 may be an example of the memory device 103 in FIG. 1. The memory device 300 may comprise a memory array 301 and a peripheral circuit 302 coupled to the memory array 301. Taking the memory array 301 being a three-dimensional NAND type memory array as an example for description, wherein the memory cell 305 is a NAND memory cell, the memory cell 305 is provided in the form of an array of memory cell strings 304, and each memory cell string 304 extends vertically above a substrate (not shown). In some aspects, each memory cell string 304 comprises a plurality of memory cells 305 coupled in series and stacked vertically. Each memory cell 305 may maintain a continuous analog value, e.g., voltage or charge, which depends on the number of electrons trapped within a region of memory cell 305. Each memory cell 305 can be either a floating gate type of memory cell comprising a floating-gate transistor or a charge trap type of memory cell comprising a charge-trap transistor.

In some aspects, each memory cell 305 is a Single Level Cell (SLC) having two possible memory states and thus may store one bit of data. For example, the first memory state "0" may correspond to a first voltage range and the second memory state "1" may correspond to a second voltage range. In some aspects, each memory cell 305 is a multi-level cell capable of storing more than a single bit of data in four or more memory states, e.g., a Multi-Level Cell (MLC) storing two bits per cell, a Triple Level Cell (TLC) storing three bits per cell, or a Quad-Level Cell (QLC) storing four bits per cell.

As shown in FIG. 4, each memory cell string 304 may comprise a Bottom Select Transistor (BST) 307 at its source terminal and a Top Select Transistor (TST) 306 at its drain terminal. The bottom select transistor 307 and the top select transistor 306 may be configured to activate the selected memory cell string 304 during read and programming operations. In some aspects, the sources of the memory cell strings 304 in the same memory block 303 may be coupled through a Common Source Line (CSL) 310. In other words, all the memory cell strings 304 in the same memory block 303 have an Array Common Source (ACS). According to some aspects, the top select transistor 306 of each memory cell string 304 is coupled to a respective Bit Line (BL) 311 from which data can be read or written via an output bus (not shown). In some aspects, each memory cell string 304 is configured to be selected or deselected by at least one of: applying a select voltage (e.g., a voltage higher than a threshold voltage of the top select transistor 306) or a deselect voltage (e.g., 0V) to a Top Select Gate (TSG) of the respective top select transistor 306 through one or more Top Select Lines (TSL) 308, or applying a select voltage (e.g., a voltage higher than a threshold voltage of the bottom select transistor 307) or a deselect voltage (e.g., 0V) to a Bottom Select Gate (BSG) of the respective bottom select transistor 307 through one or more Bottom Select Lines (BSL) 309.

As shown in FIG. 4, the memory cell string 304 may be organized into a plurality of memory blocks 303, each of which may have a common source line 310. In some aspects, each memory block 303 is a basic data unit for an erase operation, i.e., all memory cells 305 on the same memory block 303 are erased simultaneously. To erase the memory cells 305 in the selected memory block, a common source line 310 coupled to the selected memory block and an unselected memory block in the same side as the selected memory block may be biased with an erase voltage. It should be understood that, in some examples, erase operations may be performed at a half-memory block level, at a quarter-memory block level, or at a level with any suitable number of memory blocks or any suitable fraction of a memory block. Memory cells 305 of adjacent memory cell strings 304 may be coupled by word lines 312 that select which row of memory cells 305 is affected by read or programming operations.

In some examples, the peripheral circuit 302 may comprise any suitable analog, digital, and mixed-signal circuit to enable operation of the memory array 301 by applying at least one of voltage signals or current signals to each of target memory cells 305 and sensing at least one of voltage signals or current signals from each of target memory cells 305 through the bit lines 311, the word lines 312, the common source lines 310, the bottom select lines 309, and the top select lines 308. The peripheral circuit 302 may comprise various types of peripheral circuits formed using metal-oxide-semiconductor technology.

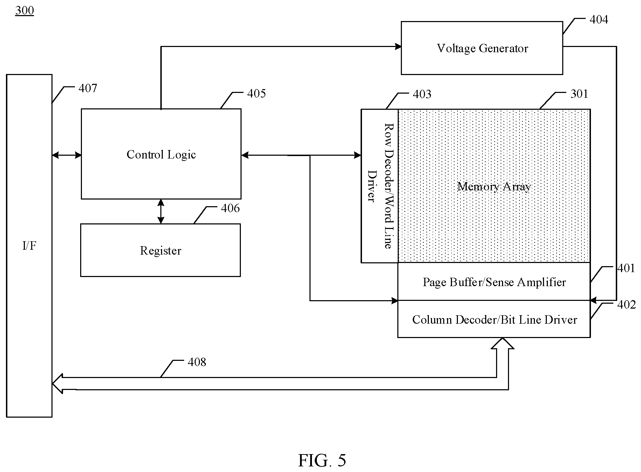

FIG. 5 shows some example peripheral circuits 302 comprising a page buffer / sensing amplifier 401, a column decoder / bit line driver 402, a row decoder / word line driver 403, a voltage generator 404, control logic 405, a register 406, a flash memory interface 407, and a data bus 408. It should be understood that, in some examples, additional peripheral circuits not shown in FIG. 5 may also be comprised.

The page buffer / sensing amplifier 401 may be configured to read data from memory array 301 and program (write) data to the memory array 301 according to control signals from the control logic 405. In one example, the page buffer / sensing amplifier 401 may store a page of programming data (written data) to be programmed to the memory array 301. In another example, the page buffer / sensing amplifier 401 may perform a programming verification operation to ensure that data has been properly programmed into memory cells coupled to the selected word line. In yet another example, the page buffer / sensing amplifier 401 may also sense a low power signal from the bit line representing a data bit stored in the memory cell, and amplify a small voltage swing to an identifiable logic level in a read operation. The column decoder / bit line driver 402 may be configured to be controlled by the control logic 405 and select one or more memory cell strings by applying a bit line voltage generated from the voltage generator 404.

The row decoder / word line driver 403 may be configured to be controlled by the control logic 405 and select / deselect a memory block of the memory array 301 and select / deselect a word line of the memory block. The row decoder / word line driver 403 may also be configured to drive a word line using the word line voltage generated from the voltage generator 404. In some aspects, the row decoder / word line driver 403 may also select / deselect and drive the bottom select line and the top select line. As described in detail below, the row decoder / word line driver 403 is configured to perform a programming operation on memory cells coupled to the (one or more) selected word line(s). The voltage generator 404 may be configured to be controlled by the control logic 405 and generate word line voltages (e.g., reading voltages, programming voltages, passing voltages, local voltages, verifying voltages, etc.), bit line voltages, and source line voltages to be supplied to the memory array 301.

The control logic 405 may be implemented in the peripheral circuit described above and coupled to various portions in the peripheral circuit, and the control logic 405 may be configured to control operation of each peripheral circuit. Register 406 may be coupled to control logic 405 and comprise status registers, command registers, and address registers for storing status information, command operation codes (OP codes), and command addresses for controlling operation of each peripheral circuit. The flash memory interface 407 may be coupled to the control logic 405 and act as a control buffer to buffer control commands received from a host-side device (not shown) and relay them to the control logic 405 and buffer status information received from the control logic 405 and relay it to a memory controller. The flash memory interface 407 may also be coupled to the column decoder / bit line driver 402 via the data bus 408, and act as a data I/O interface and a data buffer to buffer data and relay it to the memory array 301, or relay or buffer data from the memory array 301.

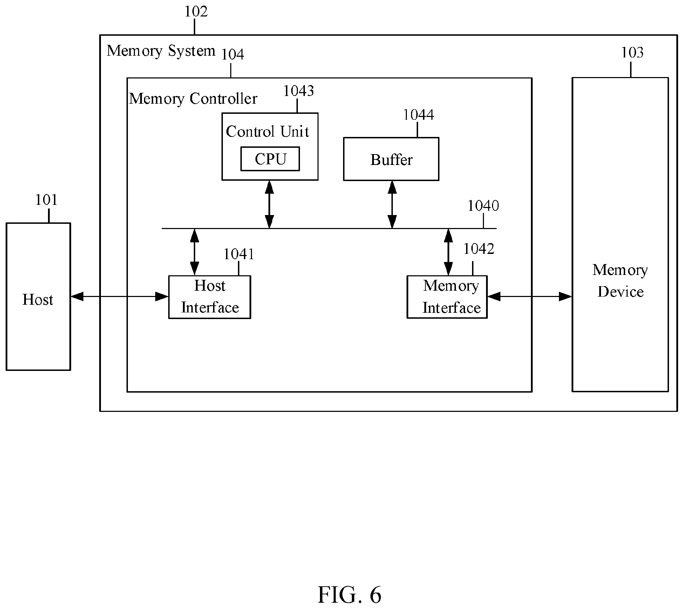

FIG. 6 is a schematic diagram of a system comprising a host and a memory system according to an example of the present disclosure. As shown in FIG. 6, the memory system 102 is connected to the host 101, and the memory system 102 may comprise a memory controller 104 and a memory device 103, the memory controller 104 is configured to control the memory device 103 to perform operations such as read, write, and erase operations, and the memory controller 104 and the memory device 103 may also be coupled in any suitable way. The memory controller 104 may comprise a host interface (I/F) 1041, a memory interface (I/F) 1042, a control unit 1043, a buffer 1044, and a bus 1040. The host interface 1041 may be a connection interface connecting host 101 and the memory controller 104, and the host interface 1041 allows the host 101 and the memory controller 104 to communicate according to a specific protocol, transmit read and write requests, and perform other operations. The memory interface 1042 may be a connection interface between the memory controller 104 and the memory device 103, and the memory interface 1042 is configured to implement data and command transmission between the memory controller 104 and the memory device 103. The control unit 1043 is configured to control the memory system 102 as a whole.

In some examples, the control unit 1043 may comprise one or more units having a logical operation capability, for example, at least one of a Central Processing Unit (CPU) or a Micro Controller Unit (MCU), or the like.

In some examples, the buffer 1044 is configured to buffer data, and may be a volatile memory device with a relatively fast read-write speed, such as at least one of a Static Random-Access Memory (SRAM) or a Dynamic Random Access Memory (DRAM).

In some examples, the memory system may be configured with one or more namespaces. The namespace is a logical division manner, which can be used to divide a memory device into a plurality of independent logical spaces, and each namespace has its independent address space and management mechanism. At the physical storage level, these namespaces need to be mapped to specific physical memory cells. For example, in an SSD, each namespace corresponds to a set of logical block addresses, and data within the range of these logical block addresses is mapped to specific physical locations in a three-dimensional NAND type memory. The division of the namespace may improve performance and management efficiency of the memory. For example, in an SSD, by creating multiple namespaces, isolation of different users or applications can be achieved, with reduced access conflicts and improved I / O performance. The buffer inside the memory controller may also be divided into namespaces.

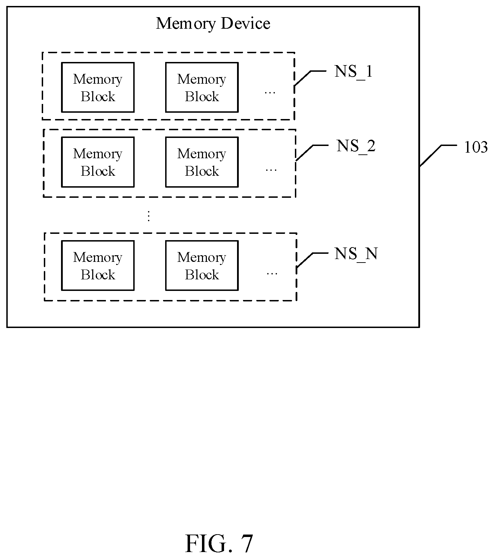

In some examples, referring to FIG. 7, the memory controller of the memory system may configure N (N is a natural number) namespaces NS_1, NS_2, ···, NS_N. Each of namespaces NS_1, NS_2, ···, NS_N may comprise at least one of a plurality of memory blocks of memory device 103. For example, when a particular memory block is comprised in a particular namespace, at least a portion of the particular memory block may be used for that namespace. When the data storage area of the memory device is divided into a plurality of logical areas, each namespace refers to a corresponding logical area. The sizes of the N namespaces NS_1, NS_2, ···, NS_N may be the same or different.

FIG. 7 illustrates an example where each of namespaces NS_1, NS_2, ···, NS_N comprises at least two memory blocks, but the present disclosure is not limited thereto, and the namespace may comprise only one memory block. On the other hand, the memory blocks comprised in each namespace may change. In other words, the memory blocks comprised in a namespace may be evicted from that namespace. Also, a new memory block may be added to the namespace.

In some examples, the data copy command only supports copy within the same namespace. In some other examples, the data copy command supports copy between two namespaces, but the implementation of the example needs to provide the file set information corresponding to the source namespace as the data to the command of copy class in the target namespace, and if the two namespaces belong to different users / systems, directly providing the file set information of the source namespace to the user / system to which the target namespace belongs might lead to the problem of information leakage.

In this regard, the present disclosure provides the following aspects.

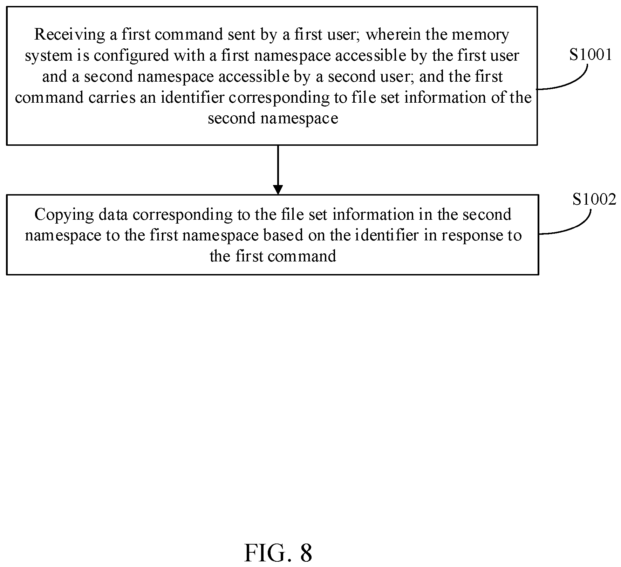

The present disclosure provides an operating method of a memory system, as shown in FIG. 8, the operating method of the memory system comprises: step S1001: receiving a first command sent by a first user; wherein the memory system is configured with a first namespace accessible by the first user and a second namespace accessible by a second user; and the first command carries an identifier corresponding to file set information of the second namespace; and step S1002: copying data corresponding to the file set information in the second namespace to the first namespace based on the identifier in response to the first command.

In the example of the present disclosure, the first command sent by the first user carries an identifier corresponding to the file set information of the second namespace, and after the first command is received, the data corresponding to the file set information in the second namespace may be copied into the first namespace based on the identifier in response to the first command. According to the example of the present disclosure, when data is copied between namespaces belonging to different users, the file set information corresponding to the source namespace (the second namespace) can be prevented from being directly exposed to the user (the first user) to which the target namespace (the first namespace) belongs, so that the information security is improved.

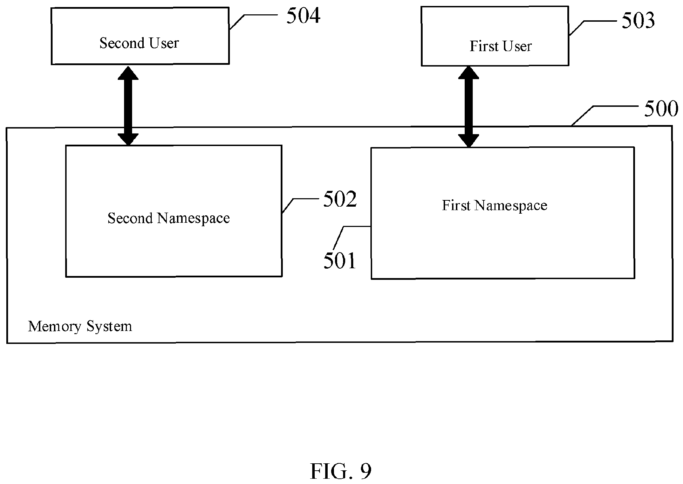

In an example of the present disclosure, as shown in FIG. 9, the memory system 500 is configured with a first namespace 501 and a second namespace 502. The first namespace 501 can be accessed by the first user 503, and the first namespace 501 cannot be accessed by the second user 504. The second namespace 502 can be accessed by the second user 504, and the second namespace 502 cannot be accessed by the first user 503. It appears to the user that the first user 503 and the second user 504 use respective namespaces independently.

In some examples, the first user 503 comprises one of a virtual machine, an application program, and a host, the second user 504 comprises one of a virtual machine, an application program, and a host, and the virtual machine / application program / host of the first user 503 is different from the virtual machine / application program / host of the second user 504, respectively.

It should be noted that the types of the first user 503 and the second user 504 given in the above examples are merely examples, and are not intended to limit the type of the first user 503 and the second user 504 in the examples of the present disclosure.

It may be understood that the first user 503 in the examples of the present disclosure may be any one of a virtual machine, an application program, and a host, and the second user 504 may also be any one of a virtual machine, an application program, and a host. The first user 503 and the second user 504 may be users of the same type, for example, the first user 503 and the second user 504 may both be virtual machines, or may both be application programs, or may both be hosts. The first user 503 and the second user 504 may also be users of different types, for example, the first user 503 is a host, and the second user 504 is an application program. However, the first user 503 and the second user 504 are two users; even if the first user 503 and the second user 504 are users of the same type, the first user 503 and the second user 504 are different users.

In some examples, the first user 503 and the second user 504 may be implemented in the same host, for example, the first user 503 and the second user 504 may be different application programs in the same host or different virtual machines in the same host. In other examples, the first user 503 and the second user 504 may be implemented in different hosts, for example, the first user 503 and the second user 504 may be application programs in different hosts or virtual machines in different hosts.

In some examples, the namespace 501 or 502 may be a namespace defined by the NVMe protocol, the first namespace 501 comprises one of a non-volatile namespace and a subsystem local memory namespace, and the second namespace 502 comprises one of a non-volatile namespace and a subsystem local memory namespace.

It should be noted that the types of the namespaces given in the above examples are merely examples, and are not intended to limit the type of the namespace in the examples of the present disclosure.

It may be understood that the first namespace 501 in the examples of the present disclosure may be any one of the non-volatile namespace and the subsystem local memory namespace, and the second namespace 502 may also be any one of the non-volatile namespace and the subsystem local memory namespace. The first namespace 501 and the second namespace 502 may be namespace of the same type, for example, the first namespace 501 and the second namespace 502 may both be a non-volatile namespace, or may both be a subsystem local memory namespace. The first namespace 501 and the second namespace 502 may also be namespaces of different types, for example, the first namespace 501 is a non-volatile namespace, and the second namespace 502 is a subsystem local memory namespace; or, the first namespace 501 is a subsystem local memory namespace, and the second namespace 502 is a non-volatile namespace.

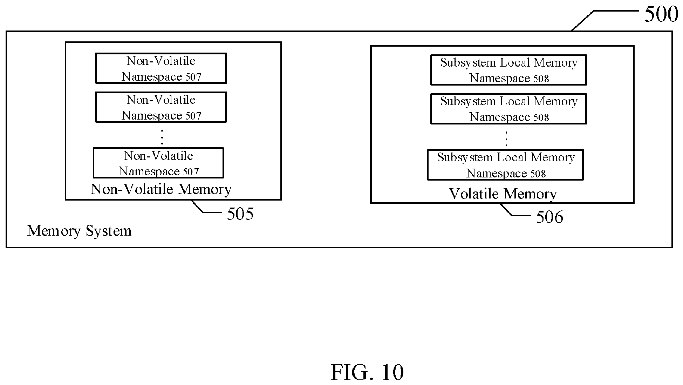

In some examples, as shown in FIG. 10, memory system 500 comprises a non-volatile memory 505, and the non-volatile memory 505 herein comprises, but not limited to, flash memory such as NAND flash memory, phase change memory, resistive memory, magnetoresistive memory, ferroelectric memory, or polymer memory. The non-volatile memory 505 is divided into a corresponding plurality of non-volatile namespaces 507.

In some examples, as shown in FIG. 10, the memory system 500 further comprises a volatile memory 506, and the volatile memory 506 herein comprises, but is not limited to, a Random Access Memory (RAM), a Dynamic Random Access Memory (DRAM), a Static Random Access Memory (SRAM), a Synchronous Dynamic Random Access Memory (SDRAM), a Double Data Rate Synchronous Dynamic Random Access Memory (DDR SDRAM). The volatile memory 506 is divided into a corresponding plurality of subsystem local memory namespaces 508. The subsystem local memory namespace 508 herein may be used to store input / output data in memory processing. The volatile memory 506 herein may be a buffer 1044 internal to the memory controller as shown in FIG. 6, or may be a memory external to the memory controller. This is not limited in the examples of the present disclosure.

It should be noted that in FIG. 10, an example in which the memory system comprises one non-volatile memory and one volatile memory is described for illustration, but the examples of the present disclosure are not limited thereto, and the number of the non-volatile memories and the volatile memories in the memory system is not limited in the examples of the present disclosure.

In some examples, when the types of the first namespace 501 and the second namespace 502 are the same, for example, when both the first namespace 501 and the second namespace 502 are non-volatile namespaces, the first namespace 501 and the second namespace 502 may correspond to a same non-volatile memory, or the first namespace 501 and the second namespace 502 may also respectively correspond to different non-volatile memories. In some other examples, when the types of the first namespace 501 and the second namespace 502 are the same, for example, when both the first namespace 501 and the second namespace 502 are subsystem local memory namespace, the first namespace 501 and the second namespace 502 may correspond to a same volatile memory, or the first namespace 501 and the second namespace 502 may also respectively correspond to different volatile memories.

In some examples, the file set information comprises logical address information and protection information.

The logical address information herein is used to indicate a logical address in the command space corresponding to the target to-be-copied data. The memory controller may determine the physical address of the target to-be-copied data based on the logical address information and the mapping relationship table between the logical address and the physical address, to perform a corresponding copying operation. Each namespace has an independent logical block address range, and the user specifies the target location of the read-write operation with the logical block address. The logical block address may be mapped to a specific physical memory location, thereby achieving efficient access to the memory device.

Protection Information (PI) herein is additional information for protecting data integrity in a related protocol (for example, an NVMe protocol), and data integrity and consistency are ensured by adding check information to data transmission.

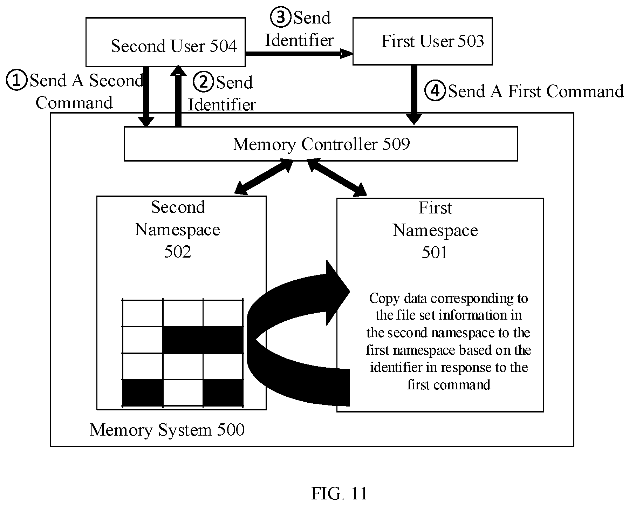

In some examples, the operating method further comprises: as shown by ① in FIG. 11, receiving, by the memory controller 509, a second command sent by the second user 504; the second command carries the File Set Information (FSI) of the second namespace 502; and generating an identifier corresponding to the file set information of the second namespace 502 based on the file set information of the second namespace 502.

In some examples, the memory controller may receive a second command sent by the second user 504, and the memory controller generates an identifier corresponding to the file set information of the second namespace 502 based on the file set information of the second namespace 502.

In some examples, the operating method further comprises: updating the correspondence relationship between the identifier and the corresponding file set information into a correspondence table in the storage component in the memory controller.

In the examples of the present disclosure, a respective correspondence table is maintained in a storage component of the memory controller, and the correspondence table is configured to record a correspondence relationship between each file set information and an identifier. After the memory controller generates the identifier corresponding to the file set information of the second namespace 502 based on the file set information of the second namespace 502, the memory controller may update the correspondence relationship between the file set information of the second namespace 502 and the corresponding identifier into the storage component in the memory controller. In the example of the present disclosure, there is a one-to-one correspondence relationship between the file set information and the identifier, and the file set information corresponding to the identifier carried in the first command may be retrieved according to the correspondence table, so that the logical address information comprised in the file set information may be found, and the memory controller determines the physical address of the to-be-copied data based on the logical address information and the mapping relationship table between the logical address and the physical address, thereby completing the copying operation.

In some examples, the identifier comprises user information reflecting the second user 504.

In some examples, the storage component herein may be a buffer 1044 in a memory controller as shown in FIG. 6.

In some examples, the second command comprises a Directive Send command.

In the example of the present disclosure, as shown in Table 1 below, DTYPE = 03h is added to the data packet of the second command, which corresponds to the transmission type of the file set information (FSI). And, DOPER = 0h (New FSI) is defined in the data packet of the second command to transmit a new file set information to the memory controller. This transmission type comprises a data transmission phase, and the data content is a Source Range Entries Copy Descriptor defined in the NVMe standard. The DPTR, STCR, PRINFOR, DESFMT, and NR field in the second command should be consistent with corresponding positions in the original copy command in the NVMe protocol.

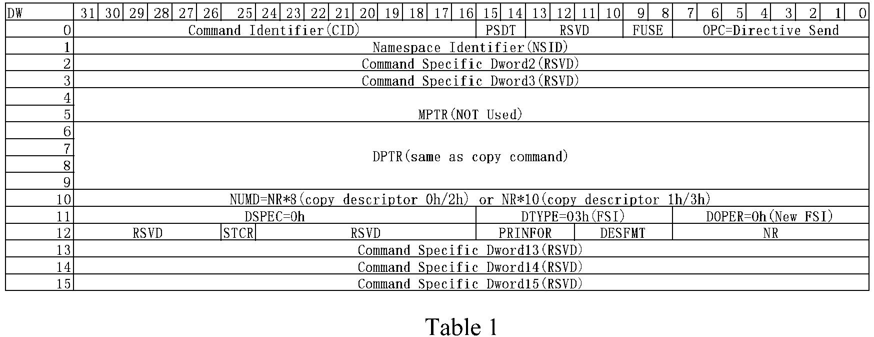

As shown in Table 2 below, DOPER = 1h (Free FSI) is defined in the data packet of the second command, and the Free FSI herein corresponds to the New FSI; and the resource corresponding to the identifier to be deleted is sent to the memory controller through the DSPEC. No data transmission NUMD = 0.

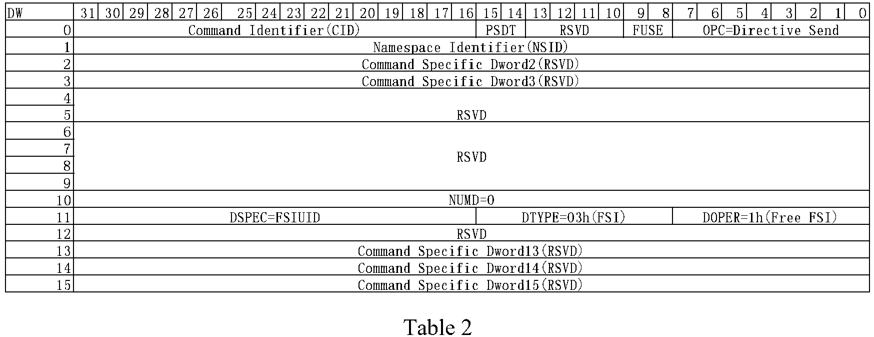

It should be noted that the specific type of the second command given above is merely an example, and is not intended to limit the specific type of the second command in the examples of the present disclosure, and the second command may also be a command other than the Directive Send command.

In some examples, the corresponding file set information may be described by using Source Range Entries in a Copy Descriptor, and the information may be added to restrict the target namespace list that may use the file set information.

In some examples, the operating method further comprises: sending the identifier to the second user 504.

As shown by ② in FIG. 11, after the memory controller 509 generates the identifier corresponding to the file set information of the second command space, the memory controller 509 may send the identifier to the second user 504. In some examples, as shown in Table 3 below, the memory controller 509 may return the identifier (FSIUID) corresponding to the file set information of the second namespace 502 to the second user 504 through a Completion Queue (CQ). If the allocation of the resource required by the second command is successful, the memory controller may return the identifier (FSIUID) corresponding to the file set information through DW0 of the completion queue. If the allocation of the resource required by the second command fails, the resource shortage may be returned through the status code of completion queue.

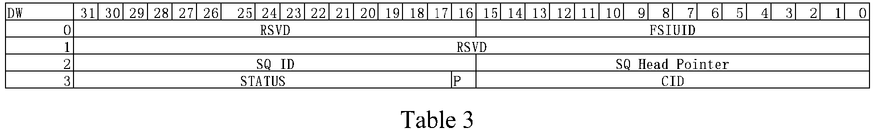

In some examples, the identifier carried in the first command is provided by the second user 504 to the first user 503.

As shown by ③ in FIG. 11, after receiving, by the second user 504, the identifier sent by the memory controller 509, the second user 504 may send the identifier to the first user 503.

As shown by ④ in FIG. 11, the first user 503 sends a first command to the first namespace 501, where the first command carries an identifier corresponding to the file set information of the second namespace 502, and the memory control 509 will respond to the first command, and copy data corresponding to the file set information of the second namespace 502 in the second namespace 502 to the first namespace 501 based on the identifier provided in the first command.

In some examples, the first command is a copy command or a memory copy command, and the present disclosure is not limited thereto.

In some examples, as shown in Table 4 below, the LBTU, the SDLBA, the LR, the FUA, the PRINFOW, the STCW, the DTYPE, the CETYPE, the DSPEC, the CEV, the LBTL, the LBATM, the LBAT field in the first command remain consistent with the corresponding fields in the original copy command and memory copy command in the NVMe protocol. However, in some aspects, the format of the data packet in the first command is different from the original copy command and memory copy command in the NVMe protocol. For example, an identifier (FSIUID) may be transmitted at [15: 0] of DW12.

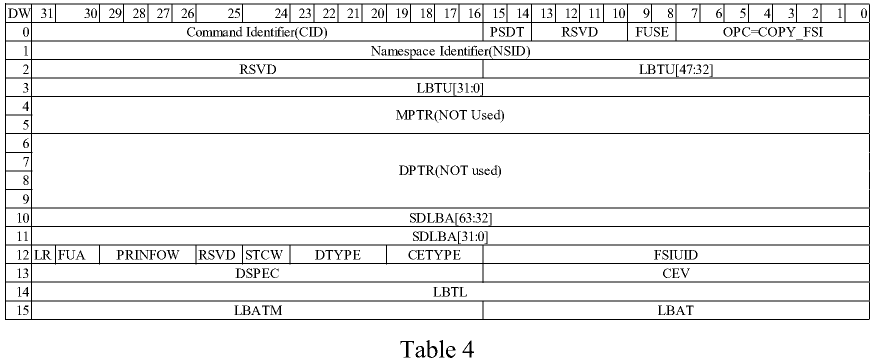

It should be noted that, in the example of the present disclosure, the first user 503 may send a plurality of first commands in sequence, but the second user 504 does not need to provide an identifier to the first user 503 each time before the first command is sent. In some examples, after the second user 504 sends the identifier to the first user 503, a subsequent plurality of first commands may all use the identifier provided by the second user 504 to the first user 503.

In some examples, copying data corresponding to the file set information in the second namespace 502 to the first namespace 501 based on the identifier in response to the first command comprises: determining the file set information corresponding to the identifier based on the identifier carried in the first command and the correspondence table; and copying the data corresponding to the file set information in the second namespace 502 to the first namespace 501 based on the file set information corresponding to the identifier in response to the first command.

It may be understood that, after receiving the first command, the memory controller 509 may conduct corresponding retrieval with the correspondence table to determine the file set information corresponding to the identifier carried in the first command, and the memory controller 509 may extract the data corresponding to the file set information based on the mapping relationship between the logical address and the physical address and the logical address information comprised in the file set information, and copy the data to the specified position in the first namespace 501, where the specified position in the first namespace 501 may be defined by the field in the first command.

In some examples, the memory system 500 comprises a Non-Volatile Memory Subsystem (NVM Subsystem), and the first namespace 501 and the second namespace 502 correspond to a same non-volatile memory subsystem.

The non-volatile memory subsystem may be a collection comprising non-volatile memory, such as flash memory, and a memory controller. It provides the user with a namespace through the memory controller, and the user can access the non-volatile memory through the namespace. The non-volatile memory subsystem is an important component of the memory system 500, and through the architecture and protocol defined by the non-volatile memory subsystem, efficient management and access to non-volatile memory can be achieved, thereby improving the overall performance and reliability of the memory system 500.

In the example of the present disclosure, the first namespace 501 and the second namespace 502 correspond to the same non-volatile memory subsystem, that is, the data copy in the examples of the present disclosure is performed in the same non-volatile memory subsystem.

Based on the above operating method of the memory system, an example of the present disclosure further provides a computer-readable storage medium 600, where the computer-readable storage medium 600 stores a computer program 601, and the computer program 601, when executed by a processor, implements the operating method of the memory system according to any one of the above examples.

Here, all or part of the processes in the operating method of the memory system in the above examples may be implemented by using a computer program to instruct related hardware, and the program may be stored in a computer readable storage medium, and the program, when executed, may comprise the processes of the examples of the above methods. The storage medium may be a Ferromagnetic Random Access Memory (FRAM), a Read Only Memory (ROM), a Programmable Read-Only Memory (PROM), an Erasable Programmable Read-Only Memory (EPROM), an Electrically Erasable Programmable Read-Only Memory (EEPROM), a Flash Memory, a magnetic surface memory, an optical disk or a Compact Disc Read-Only Memory (CD-ROM), and the like; and the storage medium may further comprise a combination of the above types of memories.

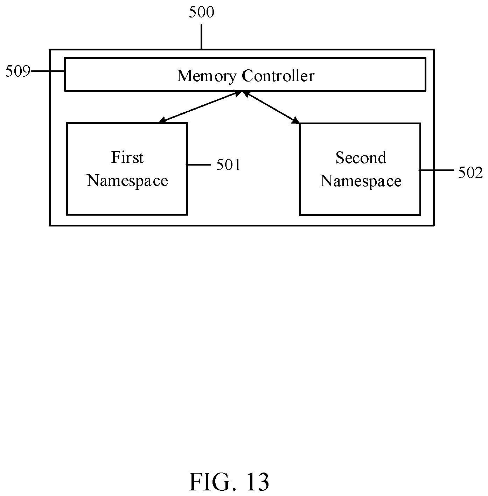

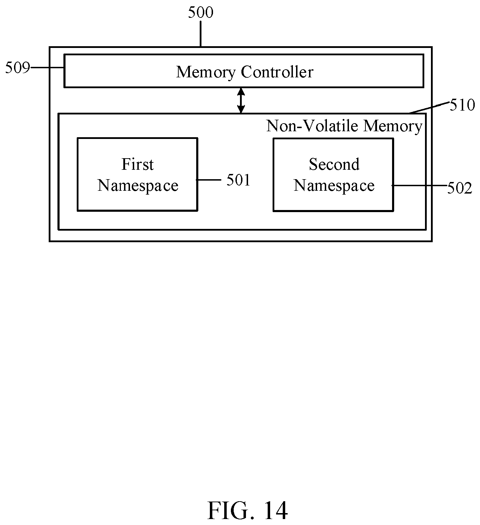

Based on the above operating method of the memory system, as shown in FIG. 13 and FIG. 14, an example of the present disclosure further provides a memory system 500, the memory system 500 comprises a memory controller 509 and a non-volatile memory 510 coupled to the memory controller 509, the memory system 500 is configured with a first namespace 501 accessible by the first user and a second namespace 502 accessible by the second user; the memory controller 509 is configured to: receive a first command sent by the first user; wherein the first command carries an identifier corresponding to file set information of the second namespace 502; and copy data corresponding to the file set information in the second namespace 502 to the first namespace 501 based on the identifier in response to the first command.

In some aspects, as shown in FIG. 14, the non-volatile memory 510 comprises a first namespace 501 and a second namespace 502.

It should be noted that FIG. 14 takes the first namespace 501 and the second namespace 502 being both non-volatile namespaces as an example for illustration; as described regarding the above operating method of the memory system, the examples of the present disclosure are not limited thereto.

In some examples, the memory system comprises a volatile memory coupled to a memory controller, where the volatile memory comprises a first namespace 501 and a second namespace 502. In some other examples, the memory system comprises a volatile memory and a non-volatile memory coupled to the memory controller, where the non-volatile memory 510 comprises one of the first namespace 501 and the second namespace 502, and the volatile memory comprises the other one of the first namespace 501 and the second namespace 502.

It should be noted that FIG. 14 takes the first namespace 501 and the second namespace 502 corresponding to a same non-volatile memory as an example for illustration; as described regarding the above operating method of the memory system, the examples of the present disclosure are not limited thereto.

In some examples, the identifier carried in the first command is provided by the second user to the first user.

In some examples, the memory controller 509 is configured to: receive a second command sent by the second user; where the second command carries the file set information of the second namespace 502; and generate the identifier corresponding to the file set information of the second namespace 502 based on the file set information of the second namespace 502.

In some examples, the memory controller 509 is configured to: send the identifier to the second user.

In some examples, the memory controller 509 comprises a storage component; and the memory controller 509 is configured to: update a correspondence relationship between the identifier and a corresponding file set information into a correspondence table in the storage component.

In some examples, the memory controller is configured to: determine the file set information corresponding to the identifier based on the identifier carried in the first command and the correspondence table; and copy the data corresponding to the file set information in the second namespace 502 to the first namespace 501 based on the file set information corresponding to the identifier in response to the first command.

In some examples, the second command comprises a Directive Send command.

In some examples, the file set information comprises logical address information and protection information.

In some examples, the first user comprises one of a virtual machine, an application program, and a host, the second user comprises one of a virtual machine, an application program, and a host, and the virtual machine / application program / host of the first user are different from the virtual machine / application program / host of the second user, respectively.

In some examples, the first namespace 501 comprises one of a non-volatile namespace and a subsystem local memory namespace, and the first namespace 501 comprises one of a non-volatile namespace and a subsystem local memory namespace.

In some examples, the memory system 500 comprises a solid state drive.

In some examples, the memory system 500 comprises a non-volatile memory subsystem, and the first namespace 501 and the second namespace 502 correspond to a same non-volatile memory subsystem.

The memory system mentioned in the above examples has been described in detail in the above examples of the operating method of the memory system, and details are not described here again for brevity.

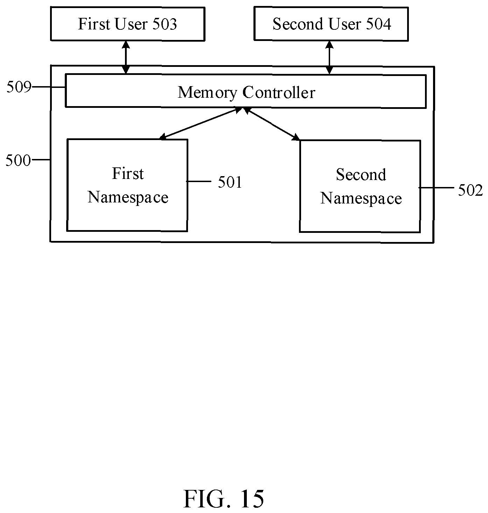

Based on the above memory system, an example of the present disclosure further provides a system, as shown in FIG. 15, and in conjunction with FIG. 14, the system comprises a memory system 500 and a first user 503 and a second user 504 coupled to the memory system 500; the memory system 500 comprises a memory controller 509 and a non-volatile memory coupled to the memory controller 509, the memory system is configured with a first namespace 501 accessible by the first user 503 and a second namespace 502 accessible by the second user 504; and the memory controller 509 is configured to: receive a first command sent by the first user 503; where the first command carries an identifier corresponding to the file set information of the second namespace 502; and copy data corresponding to the file set information in the second namespace 502 to the first namespace 501 based on the identifier in response to the first command.

Details of the above system have been described in detail regarding the operating method of the memory system and the memory system, and details are not described here again for brevity.

The features disclosed in the several device examples according to the present disclosure may be arbitrarily combined without conflict, to obtain a new device example.

The methods disclosed in the several method examples according to the present disclosure may be arbitrarily combined without conflict, to obtain a new method example.

The above descriptions are only specific aspects of the present disclosure, but the protection scope of the present disclosure is not limited thereto, and changes or replacements that may be easily conceived by any person skilled in the art within the technical scope of the present disclosure should be covered within the protection scope of the present disclosure.

## Claims

1. An operating method of a memory system, comprising:
receiving a first command sent by a first user, wherein the memory system is configured with a first namespace accessible by the first user and a second namespace accessible by a second user, and the first command carries an identifier corresponding to file set information of the second namespace; and
copying data corresponding to the file set information in the second namespace to the first namespace based on the identifier in response to the first command.

2. The operating method of claim 1, wherein the identifier carried in the first command is provided by the second user to the first user.

3. The operating method of claim 2, further comprising:
receiving a second command sent by the second user, wherein the second command carries the file set information of the second namespace; and
generating the identifier corresponding to the file set information of the second namespace based on the file set information of the second namespace.

4. The operating method of claim 3, further comprising:
sending the identifier to the second user.

5. The operating method of claim 3, further comprising:
updating a correspondence relationship between the identifier and corresponding file set information into a correspondence table in a storage component in a memory controller.

6. The operating method of claim 5, wherein the copying data corresponding to the file set information in the second namespace to the first namespace based on the identifier in response to the first command comprises:
determining the file set information corresponding to the identifier based on the identifier carried in the first command and the correspondence table; and
copying the data corresponding to the file set information in the second namespace to the first namespace based on the file set information corresponding to the identifier in response to the first command.

7. The operating method of claim 3, wherein the second command comprises a Directive Send command.

8. The operating method of claim 1, wherein the file set information comprises logical address information and protection information.

9. The operating method of claim 1, wherein
the first user comprises one of a virtual machine, an application program, and a host,
the second user comprises one of a virtual machine, an application program, and a host, and
the virtual machine / application program / host of the first user are different from the virtual machine / application program / host of the second user, respectively.

10. The operating method of claim 1, wherein the first namespace comprises one of a non-volatile namespace and a subsystem local memory namespace, and the second namespace comprises one of a non-volatile namespace and a subsystem local memory namespace.

11. The operating method of claim 1, wherein the memory system comprises a non-volatile memory subsystem, and the first namespace and the second namespace correspond to a same non-volatile memory subsystem.

12. The operating method of claim 1, wherein the identifier comprises user information reflecting the second user.

13. A memory system, comprising:
a memory controller; and
a non-volatile memory coupled to the memory controller,
wherein the memory system is configured with a first namespace accessible by a first user and a second namespace accessible by a second user, and the memory controller is configured to:
receive a first command sent by the first user, wherein the first command carries an identifier corresponding to file set information of the second namespace; and
copy data corresponding to the file set information in the second namespace to the first namespace based on the identifier in response to the first command.

14. The memory system of claim 13, wherein the identifier carried in the first command is provided by the second user to the first user.

15. The memory system of claim 14, wherein the memory controller is configured to:
receive a second command sent by the second user, wherein the second command carries the file set information of the second namespace; and
generate the identifier corresponding to the file set information of the second namespace based on the file set information of the second namespace.

16. The memory system of claim 15, wherein the memory controller is configured to:
send the identifier to the second user.

17. The memory system of claim 15, wherein the memory controller comprises a storage component, and the memory controller is configured to:
update a correspondence relationship between the identifier and corresponding file set information into a correspondence table in the storage component.

18. The memory system of claim 17, wherein the memory controller is configured to:
determine the file set information corresponding to the identifier based on the identifier carried in the first command and the correspondence table; and
copy the data corresponding to the file set information in the second namespace to the first namespace based on the file set information corresponding to the identifier in response to the first command.

19. The memory system of claim 15, wherein the second command comprises a Directive Send command.

20. The memory system of claim 13, wherein the file set information comprises logical address information and protection information.

21. The memory system of claim 13, wherein
the first user comprises one of a virtual machine, an application program, and a host,
the second user comprises one of a virtual machine, an application program, and a host, and
the virtual machine / application program / host of the first user are different from the virtual machine / application program / host of the second user, respectively.

22. The memory system of claim 13, wherein the first namespace comprises one of a non-volatile namespace and a subsystem local memory namespace, and the second namespace comprises one of a non-volatile namespace and a subsystem local memory namespace.

23. The memory system of claim 13, wherein the memory system comprises a solid state drive.

24. The memory system of claim 13, wherein the memory system comprises a non-volatile memory subsystem, and the first namespace and the second namespace correspond to a same non-volatile memory subsystem.

25. The memory system of claim 13, wherein the non-volatile memory comprises the first namespace and the second namespace.

26. A system, comprising:
a memory system; and
a first user and a second user coupled to the memory system,
wherein the memory system comprises:
a memory controller; and
a non-volatile memory coupled to the memory controller, wherein the memory system is configured with a first namespace accessible by the first user and a second namespace accessible by the second user, and the memory controller is configured to:
receive a first command sent by the first user, wherein the first command carries an identifier corresponding to file set information of the second namespace; and
copy data corresponding to the file set information in the second namespace to the first namespace based on the identifier in response to the first command.
